Europäisches Patentamt

European Patent Office

Office européen des brevets

(11) Publication number: **0 200 207**
**B1**

(12) **EUROPEAN PATENT SPECIFICATION**

(45) Date of publication of patent specification: **28.12.88**

(21) Application number: **86105908.7**

(22) Date of filing: **29.04.86**

(51) Int. Cl.⁴: **H 01 B 3/12,** C 04 B 35/00,
H 01 G 4/12

(54) Porcelain composition having a high dielectric constant.

(30) Priority: **02.05.85 JP 93741/85**

(43) Date of publication of application:
**05.11.86 Bulletin 86/45**

(45) Publication of the grant of the patent:
**28.12.88 Bulletin 88/52**

(84) Designated Contracting States:
**DE GB NL**

(56) References cited:
**DE-A-2 943 812**
**DE-A-3 223 736**

(73) Proprietor: **TDK Corporation**
**13-1, Nihonbashi 1-chome Chuo-Ku**
**Tokyo-to (JP)**

(72) Inventor: **Fujiwara, Shinobu**
**13-1, Nihonbashi 1-chome**
**Chuo-ku Tokyo-to (JP)**
Inventor: **Satoh, Atsushi**
**13-1, Nihonbashi 1-chome**
**Chuo-ku Tokyo-to (JP)**
Inventor: **Hattori, Tetsuya**
**13-1, Nihonbashi 1-chome**
**Chuo-ku Tokyo-to (JP)**
Inventor: **Sutoh, Junichi**
**13-1, Nihonbashi 1-chome**
**Chuo-ku Tokyo-to (JP)**

(74) Representative: **Eisenführ & Speiser**
**Martinistrasse 24**
**D-2800 Bremen 1 (DE)**

Courier Press, Leamington Spa, England.

## Description

### Background of the invention

#### a) Field of the invention

The present invention relates to a porcelain composition of the $Pb(Mg\ 1/3,\ Nb\ 2/3)O_3$—$PbTiO_3$—$Pb(Mn\ 1/3,\ Nb\ 2/3)O_3$ system having a high dielectric constant and being used as the laminated porcelain condenser and the like.

#### b) Prior art

The conventional porcelain dielectrics of the $Pb(Mg\ 1/3,\ Nb\ 2/3)O_3$—$PbTiO_3$—$Pb(Mn\ 1/3,\ Nb\ 2/3)O_3$ system were excellent in their electric properties, having high relative dielectric constant $\varepsilon_s$, extremely small dielectric loss tan $\delta$ and large insulating resistance IR, but they needed a range of temperatures higher than 1150°C in their sintering process.

A large amount of heat energy was therefore needed in their sintering process. Further, deterioration and loss of those materials by which the burning furnace was made were remarkable under high temperature, thereby making the maintenance cost of the burning unit high.

In addition, it is necessary in the case of the laminated porcelain condensers that their porcelain dielectrics be sintered with their internal electrodes embedded therein, and Ag—Pd alloy is usually used as their internal electrodes. As the temperature under which the dielectrics are sintered becomes high, therefore, the amount of Pd contained must be increased. The Ag—Pd alloy which is used as the internal electrodes becomes expensive accordingly, thereby making the cost of product high.

The present invention is therefore intended to provide a porcelain dielectric which can be sintered under a temperature of 1000°C or lower and when this porcelain dielectric is used as the laminated porcelain condenser, for example, cheap metal materials of low melting point which are in the group of silver, nickel, aluminum and the like can be used as the embedded internal electrodes, thereby making the thus-produced porcelain condenser extremely advantageous on its cost.

### Summary of the invention

The inventors of the present invention have studied hard, taking the above into consideration. As the result, it has been found that even when its sintering temperature is selected at 1000°C or lower, a porcelain dielectric having a high dielectric constant and same electric properties as those of the conventional ones can be obtained by adding plumbus oxide (PbO) and zinc oxide (ZnO) to the composition of $Pb(Mg\ 1/3,\ Nb\ 2/3)O_3$—$PbTiO_3$—$Pb(Mn\ 1/3,\ Nb\ 2/3)O_3$.

The present invention is intended to provide a porcelain composition of the $Pb(Mg\ 1/3,\ Nb\ 2/3)O_3$—$PbTiO_3$—$Pb(Mn\ 1/3,\ Nb\ 2/3)O_3$ system having a high dielectric constant and comprising a main component including 95 mol% of $Pd(Mg\ 1/3,\ Nb\ 2/3)O_3$, 5 mol% of $PbTiO_3$ and 0.5 weight % of $Pb(Mn\ 1/3,\ Nb\ 2/3)O_3$ and a sub-component including PbO and ZnO.

In the case of a preferred embodiment, the sub-component includes 50—93 weight%, more preferably 67—90 weight% and most preferably 80—90 weight% of PbO in relation to ZnO.

Further, the main component includes the sub-component in a range which is more than 0.25 weight% but less than 1.25 weight%, more preferably from 0.3 or above but less than 1.25 weight% and most preferably from 0.5 or above but less than 1.25 weight%.

### Brief description of drawing

Fig. 1 shows electric properties in relation to mixing ratios (weight%) of PbO and ZnO which form the sub-component.

Fig. 2 shows electric properties in relation to the amounts (weight%) of the sub-component added to the main component.

### Detailed description of preferred embodiment

An embodiment of the present invention will be described in detail with reference to accompanying drawings.

Plumbus oxide (PbO), niobium oxide ($Nb_2O_5$), magnesium oxide (MgO), titanium oxide ($TiO_2$) and manganese oxide (MnO) were used as starting materials and they were wet-mixed at mixing ratios shown in Table 1 in a ball mill which is made of synthetic resin. The mixture was roast-sintered for two hours at a temperature of 700—850°C and subjected to chemical reaction. The mixture was then ground in the ball mill to have a grain size of about 0.2—5.0 µm. Independent of the thus-prepared mixture, plumbus oxide (PbO) and zinc oxide (ZnO) were mixed at mixing ratios shown in Table 1 and ground in the ball mill or the like to have a grain size of about 0.1—2.0 µm. This mixture was added to the above-prepared mixture, as shown in Table 1, and ground in the ball mill or the like to have a grain size of about 0.2—3.0 µm.

An appropriate amount of polyvinyl alcohol was added to this finely-ground mixture, which was rendered defoaming slurry and then cast under a pressure of about 3 ton/cm² to a disc-like casting which has a diameter of 16.5 mm and a thickness of 0.6 mm. In order to prevent the evaporation of the lead element, the mold was sealed in a container made of magnesia procelain and fully burned for two hours at a temperature of about 950°C. Silver electrodes were bake-attached to both end faces of the porcelain product thus obtained.

The thus-produced samples had their electric properties measured, respectively, and their results were shown in Table 1, wherein the dielectric constant and loss $\varepsilon_s$ and tan $\delta$ were measured at a frequency of 1 KHz and the insulating resistance was measured with DC voltage of 500 V applied at a room temperature of 20°C.

As apparent from Table 1, the porcelain compositions obtained as described above had a high dielectric constant $\varepsilon_s$ of about 16,500—20,500, a small dielectric loss tan $\delta$ of about 0.8—1.4%, and an extremely large insulating resistance IR of $4\times10^{11}(\Omega)$. In addition, they could be sintered at a low temperature of 950°C.

EP 0 200 207 B1

TABLE 1

| Specimen No. | Mixing ratio of main component | | | Mixing ratio of sub-component | | Electric properties | | | Sintering temperature (°C) | Note |
|---|---|---|---|---|---|---|---|---|---|---|
| | $Pb(Mg\ 1/3,\ Nb\ 2/3)O_3$ mol% | $PbTiO_3$ mol% | $Pb(Mn\ 1/3,\ Nb\ 2/3)O_3$ wt% | PbO/ZnO wt% | Amount added wt% | Dielectric constant $\varepsilon_s$ | Dielectric loss tan δ (%) | Insulating resistance IR (Ω·cm) | | |
| ① | 95.0 | 5.0 | 0.5 | 16/1 | 0.5 | 12,000 | 0.7 | $1\times10^{11}$ | 950 | |
| 2 | 95.0 | 5.0 | 0.5 | 8/1 | 0.5 | 18,000 | 0.8 | $1.2\times10^{11}$ | 950 | |
| 3 | 95.0 | 5.0 | 0.5 | 4/1 | 0.5 | 18,500 | 1.1 | $1.6\times10^{11}$ | 950 | |
| 4 | 95.0 | 5.0 | 0.5 | 2/1 | 0.5 | 16,500 | 1.4 | $1.2\times10^{11}$ | 950 | |
| ⑤ | 95.0 | 5.0 | 0.5 | 4/1 | 0.1 | — | — | — | 950 | Difficult to be sintered |
| ⑥ | 95.0 | 5.0 | 0.5 | 4/1 | 0.25 | — | — | — | 950 | |
| 7 | 95.0 | 5.0 | 0.5 | 4/1 | 0.3125 | 19,000 | 1.2 | $4\times10^{11}$ | 950 | |
| 8 | 95.0 | 5.0 | 0.5 | 4/1 | 0.625 | 20,500 | 1.2 | $4\times10^{11}$ | 950 | |
| ⑨ | 95.0 | 5.0 | 0.5 | 4/1 | 1.25 | 21,400 | 1.7 | $3.5\times10^{11}$ | 950 | Abnormal growth and remarkable reaction with setter. |
| ⑩ | 95.0 | 5.0 | 0.5 | 4/1 | 2.50 | 21,800 | 1.2 | $4.5\times10^{11}$ | 950 | |
| | | | | | | | | | 1100~1150 | |
| . | *95.0 | 5.0 | 0.5 | — | — | 22,000 | 1.2 | $2\times10^{11}$ | | |

*—Component to be compared

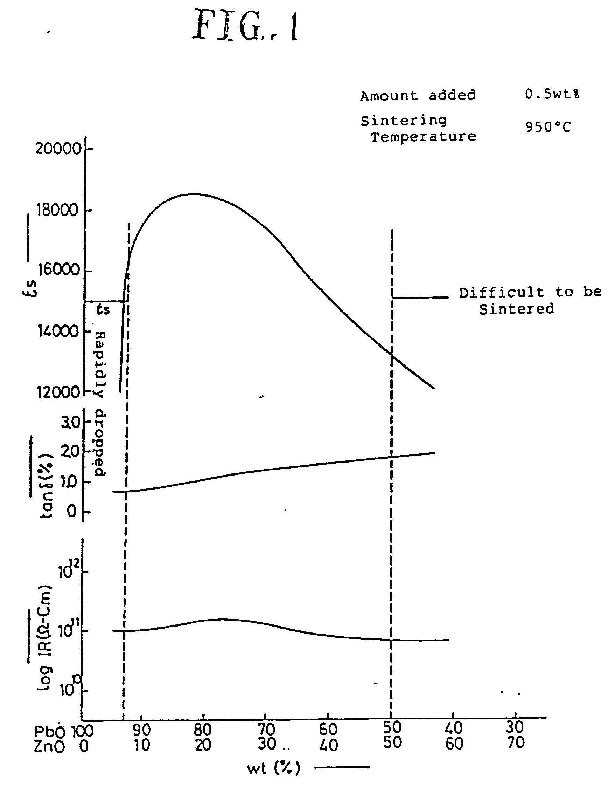

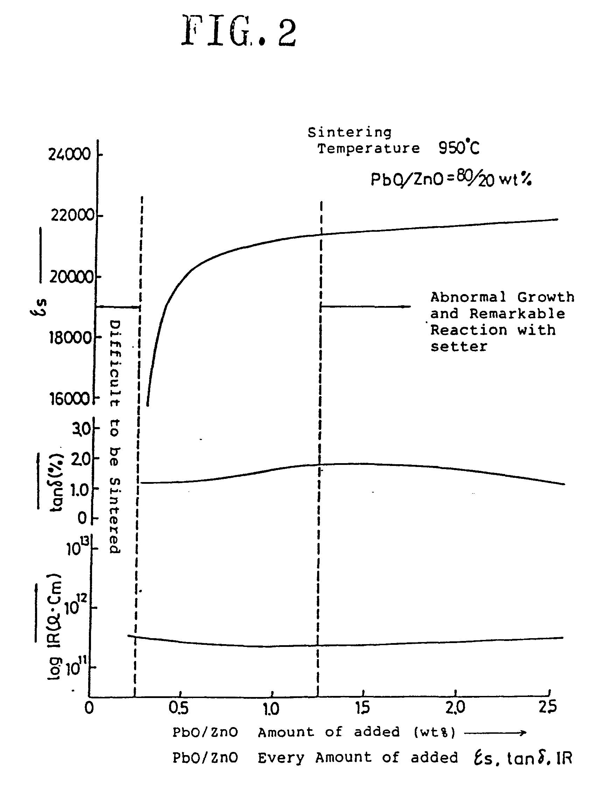

Fig. 1 is formed by plotting the mixing ratios (weight%) of plumbus oxide PbO and zinc oxide ZnO, which form the sub-component, on the axis of abscissas and plotting the insulating resistances log IR, dielectric losses tan δ(%) and dielectric constant $\varepsilon_s$ on the axis of ordinates. Fig. 2 is formed by plotting the amounts (weight %) of PbO and ZnO added to the main component on the axis of abscissas and plotting log IR, tan δ(%) and $\varepsilon_s$.

As apparent from Figs. 1 and 2, the capacity of the porcelain for being sintered is lowered and it becomes difficult for the porcelain to be sintered at low temperature, when PbO is not in a range of 50—93 weight% and ZnO is neither in a range of 7—50 weight%, that is, when PbO is less than 50 weight% (and ZnO exceeds 50 weight%). When PbO exceeds 93 weight% (and ZnO is less than 7 weight%), the capacity of the porcelain for being sintered is excellent but the dielectric constant $\varepsilon_s$ is quickly dropped, thereby making it impossible to obtain a porcelain composition having a high dielectric constant which is the main object of the present invention. When the amount (weight%) of the sub-component added to the main component is not in a range which is more than 0.25 weight% but less than 1.25 weight%, that is, when it is 0.25 weight% or below, the porcelain composition is insufficiently sintered (but it has been found that the porcelain composition can be fully sintered when its sintering temperature is further raised). When the amount of the sub-component added to the main component is 1.25 weight% or larger, the reaction of the porcelain composition is abnormally raised, and local growth of abnormal grains and reaction between setter and the porcelain occur. The porcelain dielectric in this case therefore is satisfactory in electric properties but makes it difficult to be used as the porcelain.

The present invention enables the sintering temperature to be lowered to 1000°C or lower by adding PbO and ZnO, of which the sub-component consists, to the high dielectric porcelain composition of the Pb(Mg 1/3, Nb 2/3)O$_3$—PbTiO$_3$—Pb(Mn 1/3, Nb 2/3)O$_3$ system. When the thus-obtained product is used as the laminated porcelain condenser, therefore, relatively cheap and low melting metals in the group of silver, nickel and aluminium can be used as the embedded internal electrodes. As compared with the conventional high dielectric porcelain compositions which could be sintered only at high temperature, therefore, the one of the present invention can reduce heat energy needed, and also reduce the maintenance cost of those materials by which its burning furnace is made, thereby making its final product extremely advantageous in cost.

## Claims

1. A high dielectric porcelain composition of the Pb(Mg 1/3, Nb 2/3)O$_3$—PbTiO$_3$—Pb(Mn 1/3, Nb 2/3)O$_3$ system comprising a main component including 95 mol% of Pb(Mg 1/3, Nb 2/3)O$_3$, 5 mol% of PbTiO$_3$, and 0.5 weight% of Pb(Mn 1/3, Nb 2/3)O$_3$ and a sub-component including PbO and ZnO.

2. A high dielectric porcelain composition according to claim 1 wherein said sub-component includes 50—93 weight % of PbO relative to ZnO.

3. A high dielectric porcelain composition according to claim 1 wherein the amount of said sub-component added to the main component is in a range which is more than 0.25 but less than 1.25 weight%.

4. A high dielectric porcelain composition according to claim 2 wherein said sub-component includes 67—90 weight% of PbO relative to ZnO.

5. A high dielectric porcelain composition according to claim 3 wherein the amount of said sub-component added to the main component is in a range from 0.3 or above but less than 1.25 weight%.

6. A high dielectric porcelain composition according to claim 4 wherein said sub-component includes 80—90 weight% of PbO relative to ZnO.

7. A high dielectric porcelain composition according to claim 5 wherein the amount of said sub-component added to the main component is in a range from 0.5 or above but less than 1.25 weight%.

## Patentansprüche

1. Porzellanmasse mit hoher Dielektrizitätskonstante des Pb(Mg 1/3, Nb 2/3)O$_3$—PbTiO$_3$—Pb(Mn 1/3, Nb 2/3)O$_3$-Systems mit einer Hauptkomponente aus 95 mol% von Pb(Mg 1/3, Nb 2/3)O$_3$, 5 mol% von PbTiO$_3$, und 0,5 Gewichts% von Pb(Mn 1/3, Nb 2/3)O$_3$ und einer Unterkomponente aus PbO und ZnO.

2. Porzellanmasse nach Anspruch 1, dadurch gekennzeichnet, daß die Unterkomponente 50—93 Gewichts% PbO gegenüber ZnO enthält.

3. Porzellanmasse nach Anspruch 1, dadurch gekennzeichnet, daß die der Hauptkomponente hinzugefügte Unterkomponente im Bereich von 0,25—0,125 Gewichts% liegt.

4. Porzellanmasse nach Anspruch 2, dadurch gekennzeichnet, daß die Unterkomponente 67—90 Gewichts% PbO gegenüber ZnO enthält.

5. Porzellanmasse nach Anspruch 3, dadurch gekennzeichnet, daß die der Hauptkomponente hinzugefügte Unterkomponente im Bereich von 0,3—1,25 Gewichts% liegt.

6. Porzellanmasse nach Anspruch 4, dadurch gekennzeichnet, daß die Unterkomponente 80—90 Gewichts% PbO gegenüber ZnO enthält.

7. Porzellanmasse nach Anspruch 5, dadurch gekennzeichnet, daß die der Hauptkomponente hinzugefügte Unterkomponente im Bereich von 0,5—1,25 Gewichts% liegt.

**Revendications**

1. Composition de porcelaine à constante diélectrique élevée du système Pb(Mg 1/3, Nb 2/3)$O_3$—PbTiO$_3$—Pb (Mn 1/3, Nb 2/3)$O_3$, comportant un composant principal qui contient 95% de molécules de Pb(Mg 1/3, Nb 2/3)$O_3$, 5% de molécules de PbTiO$_3$ et 0,5% en poids de Pb(Mn 1/3, Nb 2/3)$O_3$ ainsi qu'un composant secondaire qui contient PbO et ZnO.

2. Composition de porcelaine à constante diélectrique élevée selon la revendication 1, dans laquelle ledit composant secondaire contient de 50 à 93% en poids de PbO rapporté à ZnO.

3. Composition de porcelaine à constante diélectrique élevée selon la revendication 1, dans laquelle la quantité dudit composant secondaire ajoutée au composant principal est comprise dans une gamme qui va de plus de 0.25% en poids à moins de 1.25% en poids.

4. Composition de porcelaine à constante diélectrique élevée selon la revendication 2, dans laquelle ledit composant secondaire contient de 67 à 90% en poids de PbO rapporté à ZnO.

5. Composition de porcelaine à constante diélectrique élevée selon la revendication 3, dans laquelle la quantité dudit composant secondaire ajoutée au composant principal est comprise dans une gamme qui va de 0.3% en poids et plus à moins de 1.25% en poids.

6. Composition de porcelaine à constante diélectrique élevée selon la revendication 4, dans laquelle ledit composant secondaire contient de 80 à 90% en poids de PbO rapporté à ZnO.

7. Composition de porcelaine à constante diélectrique élevée selon la revendication 5, dans laquelle la quantité dudit composant secondaire ajoutée au composant principal est comprise dans une gamme allant de 0.5% en poids et plus à moins de 1,25% en poids.

# FIG. 1

Amount added    0.5wt%

Sintering      950°C
Temperature

# FIG. 2

Sintering
Temperature 950°C

PbO/ZnO = 80/20 wt %

Abnormal Growth
and Remarkable
Reaction with
setter

Difficult to be Sintered

PbO/ZnO   Amount of added (wt%) ⟶

PbO/ZnO   Every Amount of added $\mathcal{E}$s, tan$\delta$, IR